# EUROPÄISCHE PATENTSCHRIFT

(11) **EP 3 930 967 B1**
(45) Veröffentlichungstag und Bekanntmachung des Hinweises auf die Patenterteilung: **15.10.2025**
(21) Anmeldenummer: 20720334.0
(22) Anmeldetag: 17.02.2020
(51) Int. Cl.: B25J 11/00, B23P 19/06, B25J 15/00, B25J 15/10, B67D 7/04, B25J 17/02

(54) **SCHRAUBWERKZEUG ZUR HANDHABUNG VON VERSCHLUSSELEMENTEN AN FAHRZEUGBEHÄLTERN ZUR AUFNAHME VON BETRIEBSSTOFFEN**
SCREWING TOOL FOR HANDLING CLOSURE ELEMENTS ON VEHICLE TANKS FOR HOLDING FUELS
OUTIL DE VISSAGE SERVANT À MANIPULER DES ÉLÉMENTS DE FERMETURE SUR DES CONTENANTS DE VÉHICULE SERVANT À RECEVOIR DES CARBURANTS

(30) Priorität: 25.02.2019 DE 102019001407
(43) Veröffentlichungstag der Anmeldung: 05.01.2022
(73) Patentinhaber: Dürr Somac GmbH, 09366 Stollberg (DE)
(72) Erfinder: STAFFA, Uwe, 09356 St. Egidien (DE)
(74) Vertreter: Findeisen Neumann Scheit Partnerschaft mbB
(86) Internationale Anmeldenummer: PCT/DE2020/000033
(87) Internationale Veröffentlichungsnummer: WO 2020/173518

(56) Entgegenhaltungen:
- EP-A1- 0 540 777
- EP-A1- 2 053 016
- EP-A2- 2 540 457
- WO-A1-94/03391
- JP-A- 2003 211 384
- JP-A- 2009 214 920
- JP-A- H0 228 072
- JP-A- H06 179 191

## Beschreibung

Die Erfindung betrifft ein Schraubwerkzeug gemäß dem Oberbegriff des Anspruchs 1 zur Handhabung von Verschlusselementen an Fahrzeugbehältern zur Aufnahme von Betriebsstoffen, die im Herstellungsprozess der Fahrzeuge an Montagelinien der Automobilindustrie durch an der Montagelinie angeordnete roboterbasierte Baugruppen aus Befüllanlagen über Verbindungsleitungen und Adapter in die jeweiligen Kreisläufe und Behälter der Fahrzeuge eingespeist werden, wobei die roboterbasierten Baugruppen im Betrieb zwischen einer Homeposition und einer Füllposition verlagerbar sind und mindestens einen Roboterarm aufweisen.

Ein solches Schraubwerkzeug ist aus der JP H02 28072 A bekannt.

An Montagelinien der Automobilindustrie ist im Herstellungsprozess eine Befüllung von Gehäusen, Kreisläufen, Ausgleichbehältern und ähnlichen Baugruppen der Fahrzeuge mit Betriebsstoffen notwendig. Dabei werden zum Beispiel Bremsflüssigkeit, Kühlerflüssigkeit, Kältemittel oder Scheibenreiniger aus Befüllanlagen über Verbindungsleitungen und Adapter in die jeweiligen Kreisläufe und Behälter der Fahrzeuge eingespeist. Diese Befüllung wird üblicherweise durch Werker durchgeführt, welche die Adapter für jeden Betriebsstoff zum Fahrzeug führen, an die entsprechenden Fahrzeugbehälter adaptieren und nach Abschluss der Befüllung wieder deadaptieren. Das Prinzip solcher Montagelinien ist beispielsweise aus US 2003 0164 200 A1 bekannt.

Da eine derartige Handhabung für den Werker manuell und zeitlich aufwendig ist, werden für die Befüllvorgänge zunehmend roboterbasierte Vorrichtungen eingesetzt. Diesbezüglich wird in DE 10 2009 020 312 A1 vorgeschlagen, dass bei der Befüllung von Fahrzeugen an Montagestraßen der Automobilindustrie zumindest ein Betriebsstoff unter Verwendung eines Roboters befüllt wird. Aus US 2006/ 0169 350 A1 ist eine Vorrichtung bekannt, bei der mehrere Betriebsstoffe aus Vorratsbehältern in fahrzeuginterne Aufnahmebehälter befüllt werden. Die Verbindung zwischen dem Vorratsbehälter und dem Aufnahmebehälter wird mit einem Roboter realisiert.

Mit diesen technischen Lösungen wird der Werker von einer körperlich anstrengenden und monotonen Arbeit entlastet. Gleichzeitig kann eine Verminderung der Befüllzeit erreicht werden. Allerdings ist trotz der enormen Entwicklungs- und Herstellungskosten der roboterbasierten Vorrichtungen oftmals weiterhin die Mitwirkung eines Werkers notwendig, um beispielsweise am zu befüllenden Behälter vor der Befüllung Blindstopfen zu entfernen oder Verschlüsse zu öffnen und danach wieder zu verschließen. Dies ist nachteilig, weil zunehmend eine automatische Befüllung eines Fahrzeuges mit sämtlichen Betriebsstoffen durch roboterbasierte Vorrichtungen angestrebt wird.

Für derartige Einsatzfälle ist es an sich naheliegend, auch die Blindstopfen und Verschlüsse durch eine roboterbasierte Vorrichtung mit einem Schraubwerkzeug zu betätigen. Allerdings ist die praktische Umsetzung dieser grundlegenden Idee problematisch. Denn die Schraub- und ähnlichen Bewegungen müssen in einer sehr kurzen Zeitspanne mit hoher Genauigkeit und Funktionssicherheit ausgeführt werden. Weiterhin ist auch bei kurzfristig wechselnden Einsatzbedingungen (z.B. Fertigung von Fahrzeugen verschiedener Ausstattungsvarianten auf derselben Montagelinie) die Modifizierung der Werkzeuge notwendig. Diese Forderungen sind mit den am Markt bekannten Schraubwerkzeugen nur bedingt zu erfüllen. Probleme ergeben sich insbesondere, sofern der für das Schraubwerkzeug verfügbare freie Bauraum sehr begrenzt oder schlecht zugänglich ist.

Aufgabe der Erfindung ist es, ein Schraubwerkzeug für eine automatisierte Handhabung von Verschlusselementen an mit Betriebsstoffen zu befüllenden Behältern von Fahrzeugen an Montagelinien der Automobilindustrie zu schaffen. Dabei soll auch eine Anwendung bei eng begrenzten oder schlecht zugänglichen Montageräumen ermöglicht werden.

Diese Aufgabe wird gelöst, indem das Schraubwerkzeug einen plattenförmigen Grundkörper, einen Zentrischgreifer, einen Antriebsmotor, ein erstes pneumatisches Ausgleichselement für Abweichungen in der XY-Ebene und ein zweites pneumatisches Ausgleichselement für Abweichungen in der Z-Richtung aufweist. Dabei bezeichnen X / Y / Z in üblicher Weise die räumlichen Koordinaten in horizontaler und vertikaler Ausrichtung. Der Zentrischgreifer ist an einer Hohlwelle angeschraubt und an der Unterseite des Grundkörpers angeordnet. Weiterhin weist der Zentrischgreifer einen pneumatischen Antrieb zur Auslösung von Greifbewegungen und einen mechanischen Antrieb zur Auslösung von Rotationsbewegungen um seine Mittellängsachse auf. Vorzugsweise wird der Zentrischgreifer als ein Dreibackengreifer mit drei Greiferbacken ausgestaltet, wobei in Abhängigkeit der konkreten Einsatzerfordernisse auch eine andere Anzahl an Greiferbacken möglich ist. Der mechanische Antrieb zur Auslösung von Rotationsbewegungen umfasst ein unterhalb vom Grundkörper angeordnetes und mit den Zentrischgreifer verbundenes Zahnrad. Dieses Zahnrad ist über einen an der Unterseite des Grundkörpers geführten Zahnriemen mit einem am Ausgang des Antriebsmotors angeordneten weiteren Zahnrad verbunden. Der Antriebsmotor ist auf der Oberseite des Grundkörpers abgestützt und das zugeordnete Zahnrad ist unterhalb des Grundkörpers angeordnet. Die Greiferbacken sind am Zentrischgreifer angeschraubt und werden über eine Nut in Formschluss mit dem Verschlusselement und mit ihren Innenflächen in Kraftschluss mit dem Verschlusselement gebracht. An der Oberseite des Grundkörpers sind benachbart zum Antriebsmotor das pneumatische Ausgleichselement für Abweichungen in der Z-Richtung und das pneumatische Ausgleichselement für Abweichungen in der XY-Richtung übereinander und entlang einer gemeinsamen Mittellängsachse angeordnet. Dabei ist es funktionell unerheblich, in welcher Reihenfolge die zwei separaten Ausgleichselemente übereinander angeordnet sind. Wesentlich ist lediglich, dass beide Ausgleichselemente vorhanden sind, um einen seitlichen (XY-Ebene) und höhenmäßigen Ausgleich (Z-Richtung) von Toleranzen realisieren zu können. Vorteilhafte Ausgestaltungen sind Gegenstand von Unteransprüchen, deren technische Merkmale in einem Ausführungsbeispiel näher beschrieben werden.

Der grundlegende Lösungsansatz betrifft somit ein höhenoptimiertes Schraubwerkzeug, das als eine kompakte Baueinheit zur Handhabung von Verschlusselementen vorzugsweise an beengten und/oder schlecht zugänglichen Montage- bzw. Handlingsräumen geeignet ist. Eine diesbezüglich bevorzugte Anwendung ergibt sich bei der automatisierten Handhabung von Verschlusselementen an mit Betriebsstoffen zu befüllenden Behältern von Fahrzeugen an Montagelinien der Automobilindustrie. Mit dem erfindungsgemäßen Schraubwerkzeug kann eine Staubschutzkappe (z.B. temporäre Abdeckung bis zur Befüllung) oder eine Schraubkappe (z.B. Deckel des Behälters für die Bremsflüssigkeit) vollautomatisch demontiert und nach erfolgter Befüllung wieder vollautomatisch montiert werden, so dass der jeweilige Behälter vollautomatisch verschlossen wird. Somit kann dieses Schraubwerkzeug vorteilhaft in eine vollautomatische und synchrone Befüllung eines Fahrzeuges mit mehreren Robotern für verschiedene Betriebsstoffe (z.B. Bremsflüssigkeit, Kältemittel, Kühlmittel, Scheibenreiniger usw.) integriert werden.

Nachfolgend wird ein Ausführungsbeispiel anhand der Zeichnung erläutert. Es zeigen:
- Fig. 1: den prinzipiellen Aufbau eines erfindungsgemäßen Schraubwerkzeuges in perspektivischer Ansicht
- Fig. 2: eine teilweise Schnittdarstellung des Schraubwerkzeuges gemäß Fig. 1

Das in der Zeichnung dargestellte Schraubwerkzeug ist für eine Handhabung von Verschlusselementen an Fahrzeugbehältern zur Aufnahme von Betriebsstoffen konzipiert, die im Herstellungsprozess der Fahrzeuge an Montagelinien der Automobilindustrie durch an der Montagelinie angeordnete roboterbasierte Baugruppen aus Befüllanlagen über Verbindungsleitungen und Adapter in die jeweiligen Kreisläufe und Behälter der Fahrzeuge eingespeist werden. Dabei sind die roboterbasierten Baugruppen im Betrieb zwischen einer Homeposition und einer Füllposition verlagerbar und weisen einen Roboterarm auf.

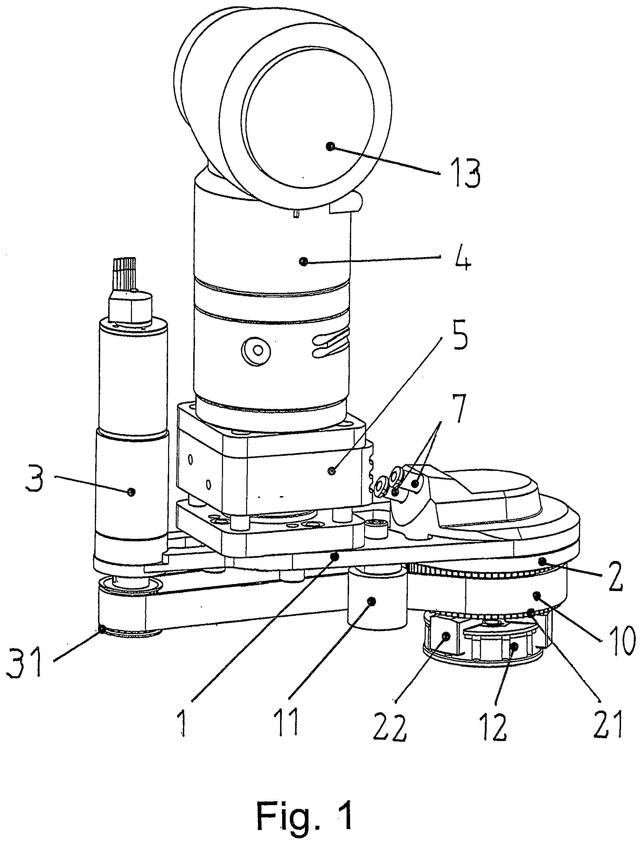

Gemäß Fig. 1 weist das Schraubwerkzeug einen plattenförmigen Grundkörper 1, einen Zentrischgreifer 2 mit mehreren Greiferbacken 22 (z.B. Dreibackengreifer), einen Antriebsmotor 3 (z.B. Servogetriebemotor oder Schrittmotor), ein erstes pneumatisches Ausgleichselement 4 für Abweichungen in der XY-Ebene und ein zweites pneumatisches Ausgleichselement 5 für Abweichungen in der Z-Richtung auf.

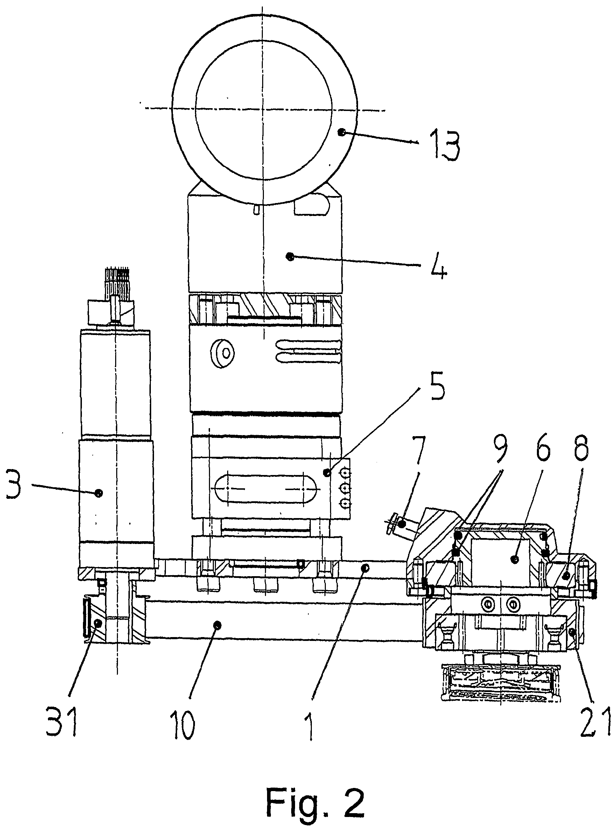

Der Zentrischgreifer 2 ist an der Unterseite des plattenförmigen Grundkörpers 1 angeordnet und weist einen pneumatischen Antrieb zur Auslösung von Bewegungen der am Zentrischgreifer 2 angeschraubten Greiferbacken 22 sowie einen mechanischen Antrieb zur Auslösung von Rotationsbewegungen um seine Mittellängsachse auf. Der Zentrischgreifer 2 ist an einer Hohlwelle 6 angeschraubt. Details der Hohlwelle 6 sind aus Fig. 2 ersichtlich. Demzufolge sind In der Hohlwelle 6 pneumatische Leitungen zum Antrieb des Zentrischgreifers 2 ausgestaltet. Der Anschluss für die Pneumatikleitungen ist mit dem Bezugszeichen 7 bezeichnet. Die Hohlwelle 6 ist in einem Vierpunktlager 8 abgestützt. Weiterhin weist die Hohlwelle 6 zwei Dichtungen 9 auf. Diese Dichtungen 9 bilden mit dem plattenförmigen Grundkörper 1 eine Drehdurchführung aus.

Der mechanische Antrieb zur Auslösung von Rotationsbewegungen umfasst ein unterhalb vom plattenförmigen Grundkörper 1 angeordnetes und mit dem Zentrischgreifer 2 verbundenes Zahnrad 21. Dieses Zahnrad 21 ist über einen ebenfalls an der Unterseite des Grundkörpers 1 geführten Zahnriemen 10 mit einem am Ausgang des Antriebsmotors 3 angeordneten weiteren Zahnrad 31 verbunden. Der Antriebsmotor 3 ist auf der Oberseite des Grundkörpers 1 abgestützt und das Zahnrad 31 ist unterhalb des Grundkörpers 1 angeordnet. Die Riemenspannung des Zahnriemens 10 wird mit einer Exzenterspannrolle 11 realisiert, die ebenfalls an der Unterseite des Grundkörpers 1 angeordnet ist.

An der Oberseite des plattenförmigen Grundkörpers 1 sind ausgehend von diesem und benachbart zum Antriebsmotor 3 das pneumatische Ausgleichselement 5 für Abweichungen in der Z-Richtung und das pneumatische Ausgleichselement 4 für Abweichungen in der XY-Richtung übereinander und entlang einer gemeinsamen Mittellängsachse angeordnet.

Das derart aufgebaute Schraubwerkzeug wird fest am bewegbaren Endabschnitt einer Roboterhand 13 eines in der Zeichnung nicht dargestellten Roboterarms befestigt. Der Roboter ermittelt mit einem optischen Vermessungssystem zunächst die aktuelle Position des Verschlusselementes am Behälter und fährt diese Position mit dem Schraubwerkzeug an. Der Toleranzausgleich erfolgt über die Ausgleichselemente 4 und 5 für Abweichungen in der XY-Ebene und in der Z-Richtung. Das Verschlusselement 12 wird dann mit dem pneumatisch betätigbaren Zentrischgreifer 2 erfasst. Über die am Zentrischgreifer 2 angeschraubten Greiferbacken 22 wird über eine Nut ein Formschluss und über die Innenflächen ein Kraftschluss zum Verschlusselement 12 erzeugt. Der Formschluss ist zur Handhabung einer Staubschutzkappe als Verschlusselement 12 ausreichend, während zur Handhabung einer Schraubkappe als Verschlusselement 12 ein Kraftschluss notwendig ist. Die für das Öffnen bzw. Verschließen des Verschlusselementes 12 notwendige Dreh-Schraub-Bewegung wird vom Antriebsmotor 3 ausgelöst, der sein Antriebsmoment über das Zahnrad 31, den Zahnriemen 10 und das Zahnrad 21 auf den Zentrischgreifer 2 überträgt. Die Spannung des Zahnriemens 10 erfolgt über die Exzenterspannrolle 11.

Sofern das Schraubwerkzeug beispielsweise zur Befüllung mit Bremsflüssigkeit eingesetzt wird, ist zu beachten, dass der Bremsflüssigkeitsbehälter aus Sicherheitsaspekten bis kurz vor der Befüllung geschlossen bleiben muss. Er wird entweder mit einer Staubschutzkappe 12 oder bereits mit der eigentlichen Schraubkappe 12 im Fahrzeug verbaut. Bei der ersten Variante wird die Staubschutzkappe 12 unmittelbar vor Befüllung mit dem Schraubwerkzeug erfasst und an einer nicht sehr exakt zu definierenden Stelle (z.B. Gitterbox) abgelegt. Bei der zweiten Variante wird die Schraubkappe 12 ebenfalls unmittelbar vor der Befüllung mit dem Schraubwerkzeug erfasst. Dann wird sie jedoch entweder lagepositioniert abgelegt, damit sie für das spätere Verschließen nach der Befüllung wieder exakt gefasst werden kann oder sie verbleibt während der gesamten Befüllung in Eingriff mit dem Schraubwerkzeug. Unabhängig von der gewählten Variante wird die Schraubkappe 12 stets nach Abschluss des Befüllvorgangs mit dem Schraubwerkzeug fest auf den Behälter aufgeschraubt.

### Bezugszeichenliste

- 1: plattenförmiger Grundkörper
- 2: Zentrischgreifer
- 21: Zahnrad
- 22: Greiferbacken
- 3: Antriebsmotor
- 31: Zahnrad
- 4: pneumatisches Ausgleichselement für XY-Ebene
- 5: pneumatisches Ausgleichselement für Z-Richtung
- 6: Hohlwelle
- 7: Anschluss für Pneumatikleitung
- 8: Vierpunktlager Hohlwelle
- 9: Dichtungen Hohlwelle
- 10: Zahnriemen
- 11: Exzenterspannrolle
- 12: Verschlusselement (Staubschutzkappe / Schraubkappe)
- 13: Roboterhand

## Patentansprüche

1. Schraubwerkzeug zur Handhabung von Verschlusselementen an Fahrzeugbehältern zur Aufnahme von Betriebsstoffen, die im Herstellungsprozess der Fahrzeuge an Montagelinien der Automobilindustrie durch an der Montagelinie angeordnete roboterbasierte Baugruppen aus Befüllanlagen über Verbindungsleitungen und Adapter in die jeweiligen Kreisläufe und Behälter der Fahrzeuge eingespeist werden, wobei die roboterbasierten Baugruppen im Betrieb zwischen einer Homeposition und einer Füllposition verlagerbar sind und mindestens einen Roboterarm aufweisen, wobei das Schraubwerkzeug einen plattenförmigen Grundkörper (1), einen Zentrischgreifer (2), einen Antriebsmotor (3), ein erstes Ausgleichselement (4) für Abweichungen in der XY-Ebene und ein zweites Ausgleichselement (5) für Abweichungen in der Z-Richtung aufweist, wobei der Zentrischgreifer (2) an einer Hohlwelle (6) angeschraubt und an der Unterseite des Grundkörpers (1) angeordnet ist, einen pneumatischen Antrieb zur Auslösung von Greifbewegungen, einen mechanischen Antrieb zur Auslösung von Rotationsbewegungen um seine Mittellängsachse und mehrere Greiferbacken (22) aufweist, wobei der Antriebsmotor (3) auf der Oberseite des Grundkörpers (1) abgestützt ist, wobei die Greiferbacken (22) am Zentrischgreifer (2) angeschraubt sind und über eine Nut in Formschluss und mit ihren Innenflächen in Kraftschluss mit einem Verschlusselement (12) bringbar sind und wobei das derart aufgebaute Schraubwerkzeug an dem bewegbaren Endabschnitt einer Roboterhand (13) des Roboterarms befestigbar ist,
**dadurch gekennzeichnet, dass** das erste Ausgleichselement (4) für Abweichungen in der XY-Ebene und das zweite Ausgleichselement (5) für Abweichungen in der Z-Richtung jeweils als pneumatische Ausgleichselemente ausgestaltet sind, wobei das pneumatische Ausgleichselement (4) für Abweichungen in der XY-Richtung und das pneumatische Ausgleichselement (5) für Abweichungen in der Z-Richtung übereinander und entlang einer gemeinsamen Mittellängsachse sowie an der Oberseite des Grundkörpers (1) und benachbart zum Antriebsmotor (3) angeordnet sind und wobei der mechanische Antrieb zur Auslösung von Rotationsbewegungen ein unterhalb vom Grundkörper (1) angeordnetes und mit dem Zentrischgreifer (2) verbundenes Zahnrad (21) aufweist, das über einen an der Unterseite des Grundkörpers (1) geführten Zahnriemen (10) mit einem am Ausgang des Antriebsmotors (3) angeordneten weiteren Zahnrad (31) verbunden ist und wobei dieses weitere Zahnrad (31) unterhalb des Grundkörpers (1) angeordnet ist.

2. Schraubwerkzeug nach Anspruch 1, **dadurch gekennzeichnet,**
**dass** der Zentrischgreifer (2) mit drei Greiferbacken (22) ausgestaltet ist.

3. Schraubwerkzeug nach Anspruch 1, **dadurch gekennzeichnet,**
**dass** der Antriebsmotor (3) als ein Servogetriebemotor ausgestaltet ist.

4. Schraubwerkzeug nach Anspruch 1, **dadurch gekennzeichnet,**
**dass** der Antriebsmotor (3) als ein Schrittmotor ausgestaltet ist.

5. Schraubwerkzeug nach Anspruch 1, **dadurch gekennzeichnet,**
**dass** in der Hohlwelle (6) pneumatische Leitungen ausgestaltet sind.

6. Schraubwerkzeug nach Anspruch 1, **dadurch gekennzeichnet,**
**dass** die Hohlwelle (6) in einem Vierpunktlager (8) abgestützt ist.

7. Schraubwerkzeug nach Anspruch 1, **dadurch gekennzeichnet,**
**dass** die Hohlwelle (6) mit zwei Dichtungen (9) ausgestaltet ist, die in Wirkverbindung mit dem Grundkörper (1) eine Drehdurchführung ausbilden.

8. Schraubwerkzeug nach Anspruch 1, **dadurch gekennzeichnet,**
**dass** an der Unterseite des Grundkörpers (1) eine mit dem Zahnriemen (10) in Wirkverbindung stehende Exzenterspannrolle (11) angeordnet ist.

## Claims

1. Screwing tool for handling closure elements on vehicle tanks for holding operating fluids, which-during the manufacturing process of vehicles on assembly lines in the automotive industry-are fed from filling systems into the respective circuits and tanks of the vehicles via connecting lines and adapters by means of robot-based assemblies arranged along the assembly line, wherein the robot-based assemblies are movable between a home position and a filling position during operation and comprise at least one robot arm, wherein the screwing tool comprises a plate-shaped base body (1), a centric gripper (2), a drive motor (3), a first compensating element (4) for deviations in the XY plane and a second compensating element (5) for deviations in the Z direction, wherein the centric gripper (2) is screwed onto a hollow shaft (6) and arranged on the underside of the base body (1), comprises a pneumatic drive for initiating gripping movements, a mechanical drive for initiating rotational movements about its central longitudinal axis and multiple gripper jaws (22), wherein the drive motor (3) is supported on the upper side of the base body (1), wherein the gripper jaws (22) are screwed onto the centric gripper (2) and can be brought into form-fit engagement via a groove and force-fit engagement via their inner surfaces with a closure element (12), and wherein the screwing tool constructed as described above can be fastened to the movable end section of a robot hand (13) of the robot arm,
**characterised in that** the first compensating element (4) for deviations in the XY plane and the second compensating element (5) for deviations in the Z direction are each configured as pneumatic compensating elements, wherein the pneumatic compensating element (4) for deviations in the XY direction and the pneumatic compensating element (5) for deviations in the Z direction are arranged one above the other and along a common central longitudinal axis as well as on the upper side of the base body (1) and adjacent to the drive motor (3), and wherein the mechanical drive for initiating rotational movements comprises a gearwheel (21) arranged below the base body (1) and connected to the centric gripper (2), which is connected via a toothed belt (10) guided along the underside of the base body (1) to an additional gearwheel (31) arranged at the output of the drive motor (3), and wherein this additional gearwheel (31) is arranged below the base body (1).

2. Screwing tool according to claim 1, **characterised in that**
the centric gripper (2) is configured with three gripper jaws (22).

3. Screwing tool according to claim 1, **characterised in that**
the drive motor (3) is configured as a servo gear motor.

4. Screwing tool according to claim 1, **characterised in that**
the drive motor (3) is configured as a stepper motor.

5. Screwing tool according to claim 1, **characterised in that**
pneumatic lines are routed within the hollow shaft (6).

6. Screwing tool according to claim 1, **characterised in that**
the hollow shaft (6) is supported in a four-point bearing (8).

7. Screwing tool according to claim 1, **characterised in that**
the hollow shaft (6) is configured with two seals (9), which, in operative connection with the base body (1), form a rotary feedthrough.

8. Screwing tool according to claim 1, **characterised in that**
an eccentric tensioning roller (11) operatively connected to the toothed belt (10) is arranged on the underside of the base body (1).

## Revendications

1. Outil de vissage servant à manipuler des éléments de fermeture sur des réservoirs de véhicules prévus pour des consommables qui, lors du processus de fabrication des véhicules sur les chaînes de montage de l'industrie automobile, sont introduits dans les circuits et réservoirs respectifs des véhicules par le biais de modules robotisés disposés sur la chaîne de montage à partir d'installations de remplissage, via des conduites de raccordement et des adaptateurs, les modules robotisés pouvant être transférés en fonctionnement d'une position initiale vers une position de remplissage et comportant au moins un bras de robot, l'outil de vissage comprenant un corps de base en forme de plaque (1), une pince concentrique (2), un moteur d'entraînement (3), un premier élément de correction (4) des écarts dans le plan XY et un second élément de correction (5) des écarts dans la direction Z, la pince concentrique (2) étant vissée sur un arbre creux (6) et disposée sur la face inférieure du corps de base (1) et comportant un entraînement pneumatique de déclenchement des mouvements de préhension, un entraînement mécanique de déclenchement des mouvements de rotation autour de son axe longitudinal central et plusieurs mâchoires de préhension (22), le moteur d'entraînement (3) étant soutenu sur la face supérieure du corps de base (1), les mâchoires de préhension (22) étant vissées sur la pince concentrique (2) et pouvant être reliées à un élément de fermeture (12) par engagement positif via une rainure et via leurs surfaces intérieures par adhérence , et l'outil de vissage ainsi constitué pouvant être fixé à la partie d'extrémité mobile d'une main de robot (13) du bras de robot,
**caractérisé en ce que** le premier élément de correction (4) des écarts dans le plan XY et le second élément de correction (5) des écarts dans la direction Z sont conçus respectivement comme des éléments de correction pneumatiques, l'élément de correction pneumatique (4) des écarts dans la direction XY et l'élément de correction pneumatique (5) des écarts dans la direction Z étant disposés l'un au-dessus de l'autre et le long d'un axe longitudinal central commun ainsi que sur la face supérieure du corps de base (1) et adjacents au moteur d'entraînement (3), et l'entraînement mécanique de déclenchement des mouvements de rotation présentant une roue dentée (21) positionnée sous le corps de base (1), reliée à la pince concentrique (2) et reliée, par l'intermédiaire d'une courroie crantée (10) guidée sur la face inférieure du corps de base (1), à une autre roue dentée (31) disposée à la sortie du moteur d'entraînement (3), et cette autre roue dentée (31) étant positionnée sous le corps de base (1).

2. Outil de vissage selon la revendication 1, **caractérisé en ce que**
la pince concentrique (2) est équipée de trois mâchoires de préhension (22).

3. Outil de vissage selon la revendication 1, **caractérisé en ce que**
le moteur d'entraînement (3) est conçu comme un servomoteur.

4. Outil de vissage selon la revendication 1, **caractérisé en ce que**
le moteur d'entraînement (3) est conçu comme un moteur pas à pas.

5. Outil de vissage selon la revendication 1, **caractérisé en ce que**
des conduites pneumatiques sont aménagées dans l'arbre creux (6).

6. Outil de vissage selon la revendication 1, **caractérisé en ce que**
l'arbre creux (6) est soutenu dans un palier à quatre points de contact (8).

7. Outil de vissage selon la revendication 1, **caractérisé en ce que**
l'arbre creux (6) est équipé de deux joints (9) qui forment un raccord tournant en liaison active avec le corps de base (1).

8. Outil de vissage selon la revendication 1, **caractérisé en ce que**
un galet tendeur excentrique (11) en liaison active avec la courroie crantée (10) est disposé sur la face inférieure du corps de base (1).
